# EUROPÄISCHE PATENTSCHRIFT

(11) **EP 0 439 749 B1**
(45) Veröffentlichungstag und Bekanntmachung des Hinweises auf die Patenterteilung: **02.03.1994**
(21) Anmeldenummer: 90124021.8
(22) Anmeldetag: 13.12.1990
(51) Int. Cl.: F16L 19/02

(54) **Rohrverschraubung**
Threaded joint
Raccord vissé

(30) Priorität: 29.01.1990 DE 4002494
(43) Veröffentlichungstag der Anmeldung: 07.08.1991
(73) Patentinhaber: Deutsche Aerospace Airbus Gesellschaft mit beschränkter Haftung, 21129 Hamburg (DE)
(72) Erfinder: Hann, Volker, Dr., W-7317 Wendlingen (DE); Krämer, Siegfried, W-2000 Hamburg (DE)

(56) Entgegenhaltungen:
- DE-A- 2 850 927
- DE-C- 118 349
- FR-A- 2 273 975
- US-A- 3 730 567
- US-A- 4 844 517

## Beschreibung

Die Erfindung bezieht sich auf eine Rohrverbindung nach dem Oberbegriff des Anspruchs 1.

Rohrverbindungen dieser Art werden beispielsweise verwendet, um Hydraulik-Leitungen mit hydraulischen Geräten zu verbinden. Dabei wird eine sehr gute Dichtigkeit und eine hohe Verdrehfestigkeit des Paßteils gegenüber dem Rohr gefordert. Aus der DE-C -118 349 ist beispielsweise eine Rohrverbindung für Weichmetallrohre mit aufgeschraubten Endhülsen bekannt, wobei vorgeschlagen wird, daß jede Hülse mit einem Innengewinde versehen ist, um durch die scharfen Gänge unmittelbar in das Rohrmaterial einschneiden zu können. Diese Rohrverbindung für ein leicht formbares Rohrmaterial ist zwar sehr einfach herzustellen, zur Erzielung überdurchschnittlicher Dauerfestigkeitswerte ist sie jedoch nicht geeignet. Bei einem Rohrmaterial mit einer geringeren Formbarkeit, wie beispielsweise Titan, dürfte diese Lösung weder bezüglich der Dichtigkeit noch bezüglich der Verdrehfestigkeit zufriedenstellende Werte liefern.

Demgemäß liegt der Erfindung die Aufgabe zugrunde, eine gattungsgemäße Rohrverbindung derart auszubilden, daß die Einwalzverbindung zwischen dem Rohr und dem Paßteil auch dann ohne Rißbildung und mit hoher Dichtigkeit und Verdrehfestigkeit herstellbar ist, wenn das Material des Rohres ein gegenüber üblichen Materialien höheres Rückfederungsverhalten zeigt.

Diese Aufgabe wird bei einer gattungsgemäßen Rohrverbindung durch die kennzeichnenden Merkmale des Patentanspruchs 1 gelöst.

Dabei ist insbesondere von Vorteil, daß ein Versagen der Rohrverbindung durch Rißbildung vermieden wird.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Rohrverbindung,
- Fig. 2: das Paßteil nach Fig. 1 als Einzelteil und
- Fig. 3: ein einfacheres Paßteil.

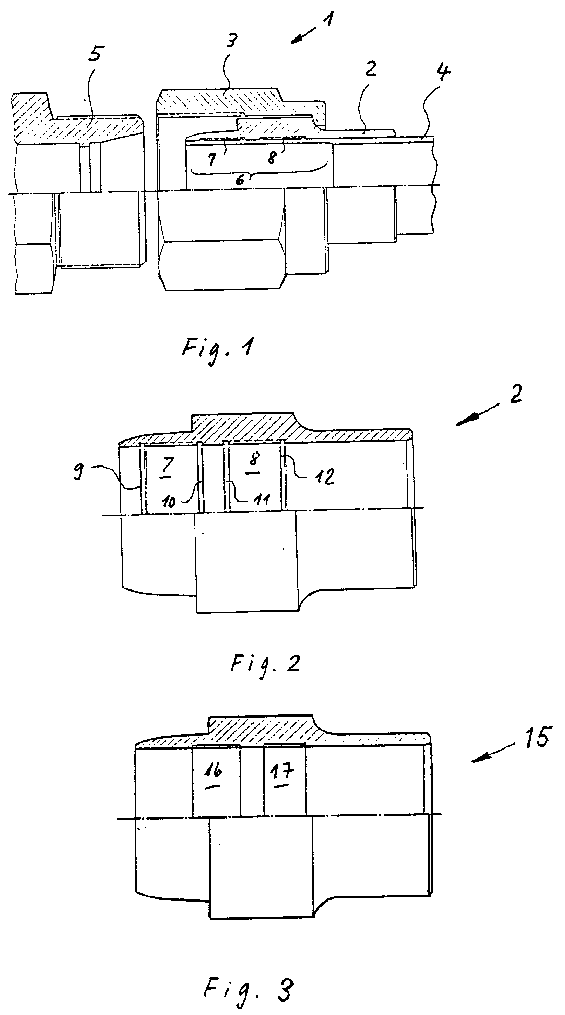

Fig. 1 zeigt eine Rohrverbindung 1 bestehend aus einem Paßteil 2 und einer Überwurfmutter 3, wobei das Paßteil 2 durch Einrollen mit einem Rohr 4 verbunden ist. An einem hier nicht gezeigten hydraulischen Gerät befindet sich ein Gewindestutzen 5. Durch Aufschrauben der Überwurfmutter 3 auf den Gewindestutzen 5 wird das Rohr 4 druckdicht mit dem Gerät verbunden. Das Material des Rohres 4 ist in einem Bereich 6 durch Walzen in seitens des Paßteils 2 eingebrachte Innengewinde 7 und 8 eingepreßt, wodurch die Verbindung zwischen dem Rohr 4 und dem Paßteil 2 hergestellt ist. Der Gewindestutzen 5 kann auch Teil einer Rohrverbindung sein, die als Gegenstück zur Rohrverbindung 1 an einem hier nicht gezeigten weiteren Rohr durch Einrollen angebracht ist.

Fig. 2 zeigt das Paßteil 2 als Einzelteil mit den Innengewinden 7,8. Außerdem sind hier Freistiche 9 bzw. 10 am Anfang und am Ende der Rille 7 und Freistiche 11 bzw. 12 am Anfang und am Ende der Rille 8 gezeigt. Diese Ausgestaltung erfüllt bezüglich Dauerfestigkeit und Druckdichtigkeit zwar höchste Anforderungen, ist aber aus fertigungstechnischer Sicht relativ aufwendig. Man wird daher einfachere Ausgestaltungen vorsehen, wenn die Anforderungen dies zulassen.

Fig. 3 zeigt daher eine einfachere Ausgestaltung der Erfindung, wobei keine Freistiche angeordnet sind. Hierdurch ergibt sich eine Senkung der Herstellkosten. Dieses Paßteil 15 weist wieder zwei Innengewinde auf, die hier mit 16 und 17 bezeichnet sind. Diese Innengewinde 16,17 verlaufen mit gleicher Steigung und im gleichen Drehsinn. Es ist auch denkbar, daß die Steigungen der beiden Innengewinde 16,17 unterschiedlich sind. Hierdurch wird die Verdrehsicherheit des Paßteils 15 gegenüber dem Rohr erhöht. Es ist weiterhin denkbar, daß die Drehsinne der Innengewinde 16 und 17 unterschiedlich sind, was eine weitere Steigerung der Verdrehsicherheit ergibt.

Bei den Innengewinden 7,8;16,17 handelt es sich praktisch um Gewinde, die unabhängig von den Normen für Schraubengewinde unter Beachtung der vorliegenden Gegebenheiten frei gestaltbar sind. Gleichwohl können auch hier die von Schraubengewinden her bekannten Gewindeprofile angewendet werden. So ist es denkbar, daß die Innengewinde 7,8;16,17 ein Dreieck-, ein Rechteck-, ein Trapez-, ein Sägezahn- oder ein Rundprofil aufweisen. Aus diesen möglichen Gewindeprofilen können diejenigen ausgewählt werden, die eine optimale Dauerfestigkeit ergeben.

## Patentansprüche

1. Rohrverbindung bestehend aus einem Verschraubungsteil (3,5) und einem mit dem Rohr fest verbundenen Paßteil (2;15), welches das Rohr von außen umschließt, wobei die Außenfläche des Rohres (4) in mindestens einen ein Innengewinde (7,8;16,17) aufweisenden Bereich des Paßteils plastisch eingeformt ist, dadurch **gekennzeichnet**,
- daß das Paßteil (2;15) zwei Bereiche mit Innengewinde (7,8;16,17) aufweist, in die die Außenfläche des Rohres (4) eingewalzt ist und
- daß sich an die Bereiche mit Innengewinde glatte Innenflächen des Paßteils anschließen, die an der Rohroberfläche anliegen.

2. Rohrverbindung nach Anspruch 1, dadurch **gekennzeichnet**,
daß die Steigungen der Innengewinde (7,8; 16,17) gleich sind.

3. Rohrverbindung nach Anspruch 1 oder 2, dadurch **gekennzeichnet,**
daß die Steigungen der Innengewinde (7,8;16,17) unterschiedlich sind.

4. Rohrverbindung nach einem der Ansprüche 1 bis 3, dadurch **gekennzeichnet**,
daß die Drehsinne der Innengewinde (7,8;16,17) gleich sind.

5. Rohrverbindung nach einem der Ansprüche 1 bis 4, dadurch **gekennzeichnet,**
daß die Drehsinne der Innengewinde (7,8;16,17) unterschiedlich sind.

6. Rohrverbindung nach einem der Ansprüche 1 bis 5, dadurch **gekennzeichnet**,
daß am Anfang und am Ende der Innengewinde (7,8;16,17) ein Freistich (9,10;11,12) angeordnet ist.

7. Rohrverbindung nach einem der Ansprüche 1 bis 6, dadurch **gekennzeichnet,**
daß die Innengewinde (7,8;16,17) ein Dreieck-, Rechteck-, Trapez-, Sägezahn- oder Rundprofil aufweisen.

## Claims

1. A pipe connection consisting of a screw coupling part (3,5) and a seating part (2;15) rigidly fixed to the pipe, which surrounds the pipe on the outside, the outer surface of the pipe (4) being plastically deformed into at least one region of the seating part containing an internal thread (7,8;16,17), characterised in that
the seating part (2;15) has two regions with internal threads (7,8;16,17) into which the outer surface of the tube (4) is expanded, and
the regions of the seating part with internal threads are adjacent to flat internal surfaces thereof which abut the external surface of the tube.

2. A pipe connection according to claim 1, characterised in that the pitches of the internal threads (7,8;16,17) are the same.

3. A tube connection according to claim 1 or 2, characterised in that the pitches of the internal threads (7,8;16,17) are different.

4. A tube connection according to one of claims 1 to 3, characterised in that the hands of the internal threads (7,8;16,17) are the same.

5. A tube connection according to one of claims 1 to 4, characterised in that the hands of the internal threads (7,8;16,17) are different.

6. A tube connection according to any one of claims 1 to 5, characterised in that at the beginning and end of the internal threads (7,8;16,17) there is a free portion (9,10;11,12) provided.

7. A tube connection according to any one claims 1 to 6, characterised in that the internal threads (7,8;16,17) have a profile which is triangular, rectangular, trapezoid, sawtooth or round.

## Revendications

1. Raccord de tubes composé d'une pièce à visser (3, 5) et d'une pièce adaptatrice (2 ; 15) solidaire du tube et qui entoure le tube, la surface extérieure du tube (4) étant déformée plastiquement dans au moins une zone de la pièce adaptatrice comportant un filetage intérieur (7, 8 ; 16, 17), raccord caractérisé en ce que :
- la pièce adaptatrice (2 ; 15) comporte deux zones à filetage intérieur (7, 8 ; 16, 17) dans lesquelles est écrasée la surface extérieure du tube (4) et
- des surfaces intérieures lisses se raccordent aux zones à filetage intérieur dans la pièce adaptatrice, ces surfaces lisses venant contre la surface du tube.

2. Raccord de tubes selon la revendication 1, caractérisé en ce que les pentes des filetages intérieurs (7, 8 ; 16, 17) sont égales.

3. Raccord de tubes selon la revendication 1 ou 2, caractérisé en ce que les pentes des filetages intérieurs (7, 8 ; 16, 17) sont différentes.

4. Raccord de tubes selon l'une des revendications 1 à 3, caractérisé en ce que les sens de rotation des filetages intérieurs (7, 8 ; 16, 17) sont identiques.

5. Raccord de tubes selon l'une des revendications 1 à 4, caractérisé en ce que les sens de rotation des filetages intérieurs (7, 8 ; 16, 17) sont différents.

6. Raccord de tubes selon l'une des revendications 1 à 5, caractérisé en ce qu'une encoche de dégagement (9, 10 ; 11, 12) est prévue au début et à l'extrémité du filetage intérieur (7, 8 ; 16, 17).

7. Raccord de tubes selon l'une des revendications 1 à 6, caractérisé en ce que le filetage intérieur (7, 8 ; 16, 17) a une section de filet triangulaire, rectangulaire, trapézoïdale, en dents de scie ou à profil arrondi.
